# EUROPEAN PATENT APPLICATION

(11) **EP 1 307 045 A1**
(43) Date of publication of application: **02.05.2003**
(21) Application number: 02079319.6
(22) Date of filing: 17.10.2002
(51) Int. Cl.: H04N 5/253

(54) **Method and system for producing multiple imagery products from a one time scan of motion picture film**

(30) Priority: 29.10.2001 US 45867
(71) Applicant: EASTMAN KODAK COMPANY, Rochester, New York 14650-2201 (US)
(72) Inventor: Rosen, Daniel, Rochester, New York 14650-2201 (US)
(74) Representative: Haile, Helen Cynthia

(57) **Abstract**

A method for producing multiple imagery products from a single scan of motion picture film is based on scanning a motion picture film and generating a digital data file that provides a full fidelity rendition of the imagery on the motion picture film, wherein full fidelity is taken to mean the substantial preservation of the spatial resolution and colorimetric profile of the motion picture film. Given the resultant fidelity of the digital date file, a plurality of processing files are provided that are able to convert the digital data file into a corresponding plurality of imagery products. Then, when a particular imagery product is desired, a processing file for the particular imagery product is selected and applied to the digital data file to generate the particular imagery product.

## Description

### FIELD OF THE INVENTION

The invention relates generally to the field of film scanning, and in particular to improvements in the transfer of motion picture film to a digital file from which an imagery product is created.

### BACKGROUND OF THE INVENTION

In the motion picture industry an original motion picture negative film is exposed during a camera exposure operation, developed into a processed camera negative and subsequently operated upon in one of several ways to produce an imagery product. In the post production phase of the motion picture industry, there are two common subsequent processes: an optical printing process and a film scanning process. It is well known that the optical printing process may be practiced in several ways in order to optically transfer the image data to a print material, where the imagery product is typically intended for theatrical projection.

In the other common subsequent process in the motion picture industry, the color negative film information (from a camera negative) or the color print film information (from an interpositive) is transferred into a video signal using a telecine transfer device in a telecine scanning process. (As with the optical process, the interpositive is a negative copying material that is used to produce a positive with the same contrast as the original negative and the same extended range of the scene; this element is then used in the trade as the element to scan on the telecine transfer device without risking harm to the original negative.) Various types of telecine transfer devices are described in *Engineering Handbook*, E.O. Fritts, Ed., 8^{th} edition, National Association of Broadcasters, 1992, Chapter 5.8, pp. 933-946, the disclosure of which is incorporated by reference. The most popular of such devices generally employ either a flying spot scanner using photomultiplier tube detectors, or arrays of charged-coupled devices, also called CCD sensors. CCD sensors include either an area array scanner (captures the full frame at once) or a linear line scanner (the film is transported across a line array of sensors and the total image is then a reconstruction of all the lines to give an area image). Telecine devices scan each negative or positive film frame transforming the transmittance at each pixel of an image into a voltage. The signal processing then inverts the electrical signal in the case of a transfer made from a negative film in order to render a positive image. The signal is carefully amplified and modulated, and fed into a cathode ray tube monitor to display the image, and/or recorded onto magnetic tape for storage in a recording stage.

The output of the telecine transfer process finds a number of imagery applications, a few of which include the following. Programs originating on film, and made specifically for the television market, are transferred from film to video using a telecine transfer device. As motion picture film is shot for television or features work it is well known that film dailies or rushes are viewed by a variety of people including the director and producer to determine which takes will be used in their productions. Video dailies obtained from a telecine transfer device are finding a place in features work replacing some of the film dailies usually viewed. The output of the telecine scanning process may be applied to a film recording stage, which produces a negative film that can be optically printed out as a release print. A major drawback in all these applications is that the video signal resulting from the telecine transfer process has to be custom processed for each application.

In the previous examples of imagery applications from the prior art, the digital data acquired in the telecine scanning process only has the restricted range of the initial video range capture. If the client desires changes to the final look, the operator can only modify the data obtained. If there was information on the photographic film element outside of the range initially captured, then it is not represented in the data and cannot be used. Ordinarily, a colorist operates a telecine transfer device by adjusting the telecine settings, which include gain, gamma, lift, illumination, matching whites, and matching blacks, to allow for the scene to be captured on the video tape correctly. The amount of latitude in setting up the telecine controls can cause clipping of data as well as viewing of a flat image on the monitor. The colorist may then have to color grade each scene, spending more telecine time and consequently adding more expense to the production job. The upshot of this is that the transfer of the film image to video and/or data fails to capture the full content of information in the film. It would be useful to have a one time (called "one light" in the trade) video setup that could streamline the process by capturing the full dynamic range of the film.

The aforementioned copending applications Serial No. [our Docket No. 83295], "Calibration of a Telecine Transfer Device for a One Time Video Setup", and Serial No. [our Docket No. 83417], entitled "Full Content Film Scanning on a Film to Data Transfer Device", provide methods for setting up a telecine transfer device such that the full dynamic range of the motion picture color negative film is available when scanned to video, thereby maintaining scanning consistency of motion picture film to video (or data) without compromising the film's inherent dynamic range. Given this ability to produce a consistent full range scan of the motion picture film, it would be desirable to build upon this advantage and further streamline the downstream utilization of the scanned data files for the many different types of imagery products.

### SUMMARY OF THE INVENTION

An object of the present invention is the production of multiple imagery products from a set of data which has been obtained by a one time optical scan of motion picture film.

The present invention is directed to overcoming one or more of the problems set forth above. Briefly summarized, according to one aspect of the present invention, a method for producing multiple imagery products from a single scan of motion picture film is based on scanning a motion picture film and generating a digital data file that provides a full fidelity rendition of the imagery on the motion picture film, wherein full fidelity is taken to mean the substantial preservation of the spatial resolution and colorimetric profile of the motion picture film. Given the resultant fidelity of the digital date file, a plurality of processing files are provided that are able to convert the digital data file into a corresponding plurality of imagery products. Then, when a particular imagery product is desired, a processing file for the particular imagery product is selected and applied to the digital data file to generate the particular imagery product.

In a further aspect of the invention, the processing files contain data necessary to spatially resample and colorimetrically process the digital data file in order to generate the particular imagery product. In addition, the source data for all the imagery products may be contained in a single file format; for instance, a single file format for digital picture exchange of motion picture imagery may include (a) an image element that contains digital data providing a full fidelity rendition of the imagery on the motion picture film, wherein full fidelity is taken to mean the substantial preservation of the spatial resolution and colorimetric profile of the motion picture film, and (b) a processing element that contains processing data that is capable of converting the digital data into a corresponding plurality of imagery products. The file format may be implemented according to SMPTE standard 268M-1994.

The advantage of the invention relates to the efficiency of using the data from a one time scan of a motion picture film for a variety of imagery products, without having to rescan the motion picture film or otherwise color grade or modify the data for a specific product.

These and other aspects, objects, features and advantages of the present invention will be more clearly understood and appreciated from a review of the following detailed description of the preferred embodiments and appended claims, and by reference to the accompanying drawings.

### BRIEF DESCRIPTION OF THE DRAWINGS

FIG. 1 is an overview of the method for producing multiple imagery products from a single scan of motion picture film in accordance with the invention.
FIG. 2 is a block diagram of a specific embodiment of a system for implementing the method as shown in Figure 1.
FIG. 3 is a block diagram of a telecine transfer device that is calibrated to provide a full fidelity scan of a motion picture film as part of the method shown in Figure 1.

### DETAILED DESCRIPTION OF THE INVENTION

Because telecine and other film scanning and transfer devices are well known, the present description will be directed in particular to elements forming part of, or cooperating more directly with, the post production processing techniques applied to data obtained from a telecine transfer device or a motion picture film scanner in accordance with the present invention. Elements not specifically shown or described herein may be selected from those known in the art. Certain aspects of the embodiments to be described may be provided in software. Given the system as shown and described according to the invention in the following materials, software not specifically shown, described or suggested herein that is useful for implementation of the invention is conventional and within the ordinary skill in such arts.

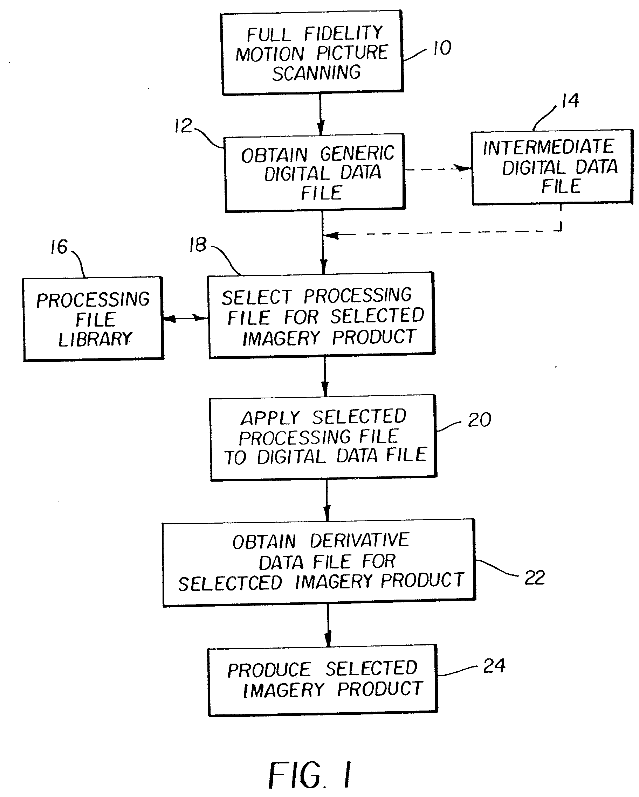

Referring first to Figure 1, an overview of the method for producing multiple imagery products from a single scan of motion picture film is shown as a series of stages originating with a full fidelity motion picture scanning stage 10. Multiple imagery products include without limitation video and film products of, e.g., different resolution and/or aspect ratios. In the scanning stage 10, a motion picture film is typically scanned by a telecine transfer device, also known as a motion picture film scanner. The critical requirement at this point, which will be discussed in detail later, pertains to the capability of the transfer device or scanner for generating a digital data file 12 that provides a full fidelity rendition of the imagery on the motion picture film, wherein full fidelity is taken to mean the substantial preservation of the spatial resolution and colorimetric profile of the motion picture film. In practice, this digital data file 12 would be likely to be saved as a digital intermediate storage 14, such as a tape or disc, that would be made available as a generic data element for subsequent processing.

More specifically, the subsequent processing involves a processing file library 16 containing a plurality of processing files that are capable of converting the digital data file into a corresponding plurality of imagery products, without having to rescan the motion picture film. The provision of such files enables the production of multiple imagery products from a set of data, i.e., the digital data file, which has been obtained by a one time optical scan of motion picture film in the scanning stage 10. The next phase is to pick a particular imagery product and to select (in the selection stage 18) a corresponding processing file from the library 16 for the particular imagery product. In the processing stage 20, the selected processing file is applied to the digital data file, which generates a derivative data file 22 for the selected imagery product. Finally, the derivative data file 22 is used in a production stage to produce the selected imagery product 24.

These different stages may be implemented according to a number of different business practices. For instance, the scanning stage 10 may be performed by one post production facility and the digital data file would be provided to a second post production facility (as, e.g., the digital intermediate storage 14), where the appropriate imagery product would be produced. The digital data file could be transmitted as a hard copy digital master or via a network (e.g., the Internet) between the post production facilities. The processing files could be maintained separate from the digital data file or they could be contained within, or connected to, the digital files; in the latter case, a single file format could contain the source data for all the imagery products. In a further variation, the selected processing file may be obtained, e.g., for a fee, over a network from a processing file library 16 maintained on a server remote from the second (and first) post production facility. For example, the processing file library 16 could be maintained on a website on the Internet. Alternatively, of course, all of the stages could be performed in one post production facility, perhaps with a local area network interconnecting the various stages. These examples should not be seen as limitations of the invention, inasmuch as other methods of practice, which are intended to be included within this invention, will be obvious to a person skilled in this art.

A number of imagery products have been identified as potential products of the method illustrated in Figure 1. Examples of such multiple imagery products include any of the following:
- a duplicate motion picture negative.
- a broadcast standard definition video master with 4:3 full image ("pan and scan" master).
- a broadcast standard definition video master with full film image ("letterbox" master).
- a broadcast high-definition video master with 16:9 full image ("pan and scan" master).
- a broadcast high-definition video master with full film image ("windowbox" master).
- a digital standard definition master suitable for DVD production.
- individual digital frames suitable for paper print production.
The products enumerated above are not intended to be an exhaustive list; the invention is intended to cover other products that may be known to, or obvious to, a person skilled in this art.

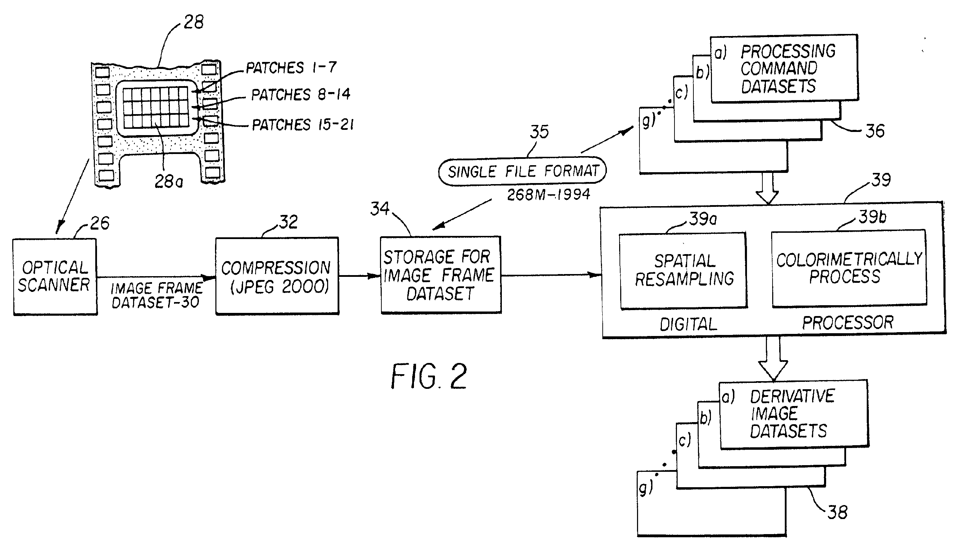

Figure 2 shows a high level diagram of a system, and elements of its workflow, for implementing the method illustrated in Figure 1. An optical scanner 26 is utilized to capture and store the image frames of motion picture film in a full-fidelity manner. In this stage, since a motion picture film is typically being scanned, the scanner is typically a telecine transfer device; an example of a telecine transfer device, also know as a motion picture film scanner, is the Spirit DataCine™ available from THOMSON Multimedia Broadcast & Network Solutions. The optical scanner 26 is calibrated with a neutral gray series calibration strip 28 to provide a full fidelity scan of the motion picture film. Full fidelity is defined as the capture of data with a spatial resolution no less than 95% of the determined perceived resolution of the particularly photographed film and a colorimetric profile which is less than 5% in error in density as measured from each of the color channels of the film negative. The data resulting from the scan is known as an "image frame dataset". The image frame dataset 30 is applied to an image compression section 32, which compresses the dataset with an appropriate compression algorithm, such as a JPEG or MPEG algorithm. The compressed image frame dataset is then stored in the image frame dataset storage 34.

The data necessary to spatially resample and colorimetrically process the image frame dataset as appropriate for the multiple imagery products, such as the seven defined products listed above, are determined and stored as "processing command sets" 36. For instance, it would be necessary to include data which converts digital red, green and blue (RGB) pixel values which describe color within the scanned film color gamut to digital luminance and chrominance (YCbCr) values which describe color with the CCIR-601 video color gamut. Since the video color gamut ordinarily forms a subset of the film color gamut, a set of look up tables shall be applied to the video color values once they have been derived through a matrix multiplication method from the film RGB values. These look up tables shall provide a correspondence between colors which are outside of the video gamut, but within the film gamut in such a way that the out of gamut colors shall be replaced by the closest in gamut colors.

Each of the processing command sets 36 may be applied to the image frame dataset 30 thereby creating a new set of frame data known as "derivative image datasets" 38. In operation, depending upon which of the products has been selected, one of the processing command sets 36 is selected by a digital processor 39 and applied to the image frame dataset 30. The processor includes an algorithm 39a for spatial resampling of the image frame dataset 34 and a colorimetric algorithm 39b for modifying the color characteristics of the image frame dataset 30 according to the product desired.

The derivative image dataset 38 is a distinct collection of images from the image frame dataset 30, and the production of the derivative image dataset 38 in no way effects the image frame dataset 30. Thus, the processing command sets 36 may be repeatedly applied to the image frame dataset 30 to produce any number of derivative image datasets 38. In particular, multiple processing command sets 36 may be developed for a particular imagery product in order to produce differing visual "looks" as are desired to accommodate differing audience/customer sensibilities.

In a preferred embodiment of the invention, pixel data within the image frame dataset 30 is compressed on a per component basis in the compression stage 32 utilizing the lossless wavelet compression algorithm described in the JPEG-2000 specification; ISO/IEC 15444-1:2000. The compressed data is stored in the image frame dataset storage 34 utilizing the Society of Motion Picture and Television Engineers standard 268M-1994, "File Format for Digital Picture Exchange (DPX)" with the following user defined addition: field 21.11 defined as "Encoding for image element" shall contain the value 8 denoting lossless wavelet compression utilizing the JPEG-2000 defined encoding scheme.

In addition, the source data for all the imagery products may be contained in a single file format. For instance, a single file format for digital picture exchange of motion picture imagery may include (a) an image element that contains digital data providing the full fidelity rendition of the imagery on the motion picture film, and (b) a processing element that contains a plurality of processing files that are capable of converting the digital data file into a corresponding plurality of imagery products. The processing element of the file format may contain the necessary resampling and colorimetry processing commands for converting the digital data file into the imagery products. The resultant format for the image frame dataset 30, which may follow the framework of the SMPTE 268-1994 standard, thus provides (referring to Figure 2) a single file format 35 to contain the source data for all film and video products forming the set of multiple imagery products.

The processing command datasets 36 may be stored within the SMPTE 268M-1994 file header in section 3 "User Defined Information". In one example for "pan and scan" video, this data should include, at a minimum, the following extraction data:
- 4 byte (32 bit unsigned integer) - X location in pixels of the upper left hand corner of the extracted picture area.
- 4 byte (32 bit unsigned integer) - Y location in pixels of the upper left hand corner of the extracted picture area.
- 2 byte (16 bit unsigned integer) - width in pixels of the extracted picture area.
- 2 byte (16 bit unsigned integer) - height in pixels of the extracted picture area.
Other imagery products would include other types of data needed to extract and correct the data according to their respective requirements.

As the original image frame dataset 30 is untouched by the process of producing a derivative image dataset 38, only a single image frame dataset per motion picture needs to be produced. In order to ensure the production of a single image frame dataset 30 with sufficient dynamic range for any of the imagery products, the use of a scanning process for the production of full fidelity "one light" scans from an optical scanner forms an integral part of this process. Such a scanning process is described in the aforementioned commonly assigned U.S. Patent Applications Serial No. [our Docket No. 83295], "Calibration of a Telecine Transfer Device for a One Time Video Setup" and Serial No. [our Docket No. 83417], "Full Content Film Scanning on a Film to Data Transfer Device", which are both filed on even date herewith and both incorporated herein by reference.

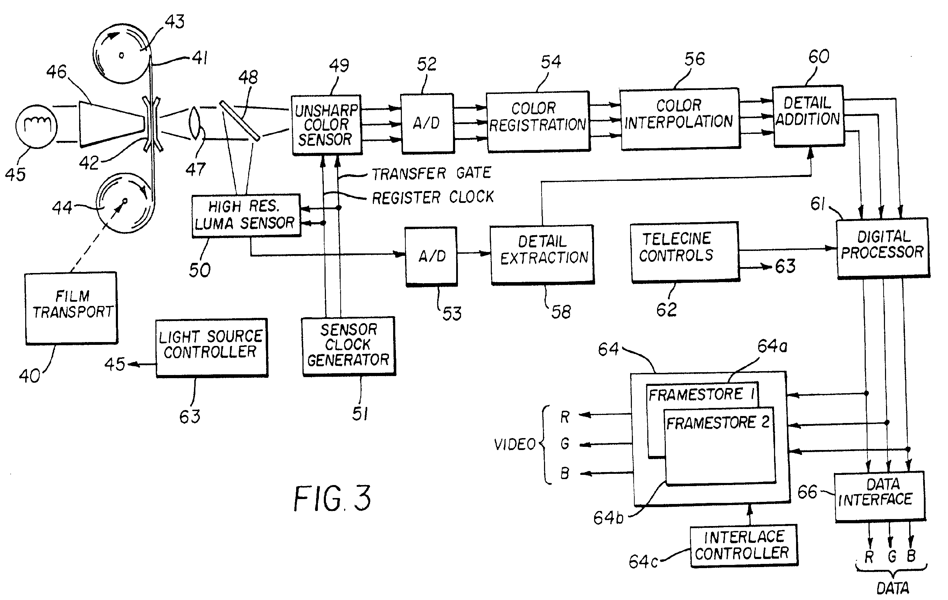

Since one time scanning forms an integral part of the present method, it is helpful to briefly review the details of the full fidelity telecine scanning process. Referring to Figure 3, which shows a telecine transfer device in more detail, a film transport 40 advances a motion picture film 41 at a substantially uniform speed through a film gate 42 from a supply reel 43 to a take up reel 44. A light source 45 generates a light beam that is directed through a circle to line converter 46 and focused upon a linear section of the film 41 in the film gate 42. The light is modulated by the image in the film 41 and transmitted through an objective lens 47 to a beam splitter 48, which transmits one portion of the light to an unsharp color sensor 49 and reflects the other portion to a high resolution luminance sensor 50. The color sensor 49 comprises three linear color arrays respectively sensitive to red, green and blue light. The luminance sensor 50 includes a linear array sensitized to light having a spectral composition approximating a luminance function. A sensor clock generator 51 provides a clock signal of appropriate frequency(s) for shifting the respective image signals from the output registers of the color sensor 49 and the luminance sensor 50.

The luminance sensor 50 produces a full resolution signal according to the requirements of the high definition standard, or the film scanning standard, in use. Low resolution, or unsharp, color is provided from the color arrays comprising the color sensor 49, allowing the color photosites to be accordingly larger, which has the advantageous effect of increasing the signal-to-noise performance. The unsharp color sensor 49 provides three channels of color data to an analog-to-digital converter 52 and the luminance sensor 50 provides a high resolution data stream to another analog-to-digital converter 53. Because the three color arrays comprising the color sensor 49 are spaced in the direction of film motion, the fixed mis-registration of their output signals is corrected in color registration circuit 54. Since the digital color values represent lower resolution data than the digital luminance values, additional color values are generated in a color interpolation circuit 56 in both the horizontal and vertical directions. Meanwhile, high frequency detail is extracted from the luminance data by a detail extraction circuit 58 and added to each channel of color in an addition circuit 60, forming thereafter a full resolution, three channel, high definition color output signal.

This high definition signal is applied to a digital processor 61, which can apply adjustments to the high resolution signal as determined from a telecine color grading controller 62. Such controllers are well known in the industry and available from a variety of sources: examples include the da Vinci 2K color enhancement system available from da Vinci Systems, Inc. and the Pogle Platinum system available from Pandora International Ltd. The telecine color grading controller 62 is connected into the output video stream from the telecine transfer device to provide primary control of the device. Along with the telecine color grading controller 62, there are associated devices such as a vector scope and waveform monitor that are used to view changes that are made to the telecine primary controls. These primary controls set parameters such as illumination, matching blacks, matching whites, lift, gamma, gain, master whites, and master blacks, which may be manually adjusted through the telecine color grading controller 62 to allow for correct film transfer. During calibration, a colorist would operate the controls on the telecine color grading controller 62, primarily to adjust the lift (dark areas), gain (highlights) and gamma (mid-tone) of the images produced by the high resolution signal. The controller 62 also includes an adjustment for the light level of the light source, which is communicated to a light source controller 63.

The full resolution, three channel, high definition color output signal from the digital processor 61 is further processed either as a video output through an image store 64 or as the image frame datasets output through a data interface 66. The image store 64 includes a first framestore 64a, a second framestore 64b and an interlace controller 64c for loading the high resolution data into one framestore while extracting high resolution video fields in interlace format from the other framestore. The output of the image store 64 can be applied to a calibrated high definition monitor or to a digital (or analog) video recording stage. Referring to Figure 2, the data output from the data interface 66 constitutes the image frame datasets that are compressed and stored for subsequent application to the digital processor 39. Further details of the telecine transfer device and its operation can be found in commonly-assigned U.S. Patent No. 5,045,932, "Method and Apparatus for Generating a High Definition Electronic Signal from a Line Scan of a Color Signal", which is incorporated herein by reference.

In order to completely describe a motion picture color negative tone scale by calibrating the telecine transfer device as described in the copending U.S. Patent Applications Serial No. [our Docket No. 83295] and Serial No. [our Docket No. 83417], a multi-step neutral gray scale series is made by using a conventional sensitometric type of exposing device. While there is no particular requirement for the number of steps, a 21 step neutral gray scale series has been found to provide adequate coverage. This tone scale strip consists of 21 red, green and blue (RGB) densities (each patch having a unique RGB density) giving what is commonly referred to as a D-logE (density vs. log exposure) curve. Using this density metric as a reference, a telecine transfer device can be made to emulate this film response thus allowing for a range of densities from minimum (Dmin) to maximum (Dmax) to be captured and displayed on a calibrated video monitor. The calibration strip 28 (Figure 2) is an example of what a 21-step neutral gray scale series might look like with each density patch 28a aligned such that all 21 steps can be exposed in a full aperture film frame. (This particular patch arrangement is only for convenience, e.g., the patches could be in a series of frames or otherwise arranged.)

Each step 28a in the density patch series has a unique RGB density level consistent with the exposure given by the sensitometric exposing device, and corresponds to a particular set of aim voltages that will be produced by a properly calibrated telecine transfer device scanning the same patch. The typical 21-step neutral gray scale series for the red, green and blue channels thus effectively plots density vs. patch number for a typical motion picture film. Accordingly, the entire film curve is present in the series to allow for the range needed for correct telecine transfer. Scenes with exposures that have detail in the blacks will be maintained through the toe of the curve for later creative decisions as well as specular highlights in the shoulder of the curve. The full latitude of the film's exposure is kept throughout the entire exposure range.

In a particular feature of the invention described in U.S. Patent Application No. [our Docket No. 83295], the neutral gray scale series is produced for a typical motion picture film (e.g., Eastman Kodak Company 5293 color negative film), and the specific adjustments for another film type are made through a custom film-stock dependent adjustment and correction. The film-stock dependent corrections are stored as a plurality of corresponding 1D LUTs. The identity of the film type of the filmstock currently being scanned by the telecine transfer device is determined by its Keycode™ identification, which is a barcode present on the edge of many motion picture film stocks. Once the film type is decoded, the appropriate 1D LUT is applied to the data. A 3x3 matrix may also be applied for color correction.

An important advantage of this calibration technique is having a known good telecine setup position provided through the calibration process, thereby consistently allowing a full fidelity scan and transfer of substantially all the information on the color negative film, and additionally applying the appropriate film type corrections for video capture and display. The latter feature is accomplished by applying corrections (e.g., in the form of look up tables (LUTs)) to the scanned video using the film type as the selection criteria.

Another method for capturing the full fidelity content of a photographic element on a telecine transfer device is described in the aforementioned Serial No. [our Docket No. 83417], entitled "Full Content Film Scanning on a Film to Data Transfer Device". Briefly summarized, this application describes a method of transferring an image recorded on a photographic film to a digital signal that is based on calibrating the film scanning device in relation to printing densities and then scanning a motion picture film with the film scanning device to produce scan data that represents printing densities. With a specific calibration to printing density, the telecine transfer device can accurately capture the information on the film element in such a way that the resulting code values represent true printing densities, which when written out to a properly calibrated film recorder, will produce printing densities of the output film onto the target print material that are identical to the printing densities of the same film element optically printed onto the target print material. Thus, in the end, a print optically produced from the recorder-generated negative via the telecine scanning process will match, in tone scale and color reproduction, the print optically produced from the original film element via the optical printing process.

In practice, the actual, specific calibration of the telecine for a variety of filmstocks would use a plurality of calibration film elements, wherein each film element is used to calibrate the system for an accurate extended range printing density scan of a given film having given density-log exposure characteristics (one film element can be used for each set of films with similar characteristic curves). The specific characteristic of the calibration film element is ordinarily obtained by a series of exposures on a sensitometer. In Serial No. [our Docket No. 83417], the exposure range is chosen from a standard set, in this case a 0 - 4.0 Log Exposure range (approx. 13.33 Stops) which on a film with a gamma of 0.55 reflects a printing density range of 2.20 which is slightly outside of the 2.046 printing density range of the usual 10-bit log format. As shown in Figure 2, the calibration film element 28 ordinarily includes a plurality of neutral patches 28a ordered into a set, e.g., from light to dark; for instance, the calibration film element 28 includes twenty-one patches 28a ordered at 0.2 log exposure increments for the 0 - 0.4 log exposure range.

Further specific details as to the calibration processes can be found in the aforementioned U.S. Patent Applications Serial No. [our Docket No. 83295], "Calibration of a Telecine Transfer Device for a One Time Video Setup" and Serial No. [our Docket No. 83417], "Full Content Film Scanning on a Film to Data Transfer Device".

## Claims

1. A method for producing multiple imagery products from a single scan of motion picture film, said method comprising the steps of:
scanning a motion picture film and generating a digital data file that provides a full fidelity rendition of the imagery on the motion picture film, wherein full fidelity is taken to mean the substantial preservation of the spatial resolution and colorimetric profile of the motion picture film;
providing a plurality of processing files that convert the digital data file into a corresponding plurality of imagery products;
selecting a processing file for a particular imagery product; and
applying the selected processing file to the digital data file to generate the particular imagery product.

2. The method as claimed in claim 1 wherein the processing files are capable of directly converting the digital data files into a corresponding plurality of imagery products without having to rescan the motion picture film.

3. The method as claimed in claim 1 wherein the processing files contain data necessary to spatially resample and colorimetrically process the digital data file in order to generate the particular imagery product.

4. The method as claimed in claim 1 wherein the multiple imagery products include film and video products.

5. The method as claimed in claim 1 further comprising the step of storing the digital data file.

6. The method as claimed in claim 1 further comprising the step of compressing the digital data file.

7. The method as claimed in claim 6 wherein the method of compression is a lossless wavelet compression.

8. The method as claimed in claim 1 wherein the digital data file utilizes a single file format that also contains source data for the processing files for the imagery products.

9. The method as claimed in claim 8 wherein the source data included in the single file format includes data necessary to spatially resample and colorimetrically process the digital data file in order to generate the particular imagery product.

10. The method as claimed in claim 1 wherein the digital data file is provided as a digital intermediate file to a separate post production facility that applies the selected processing file to the digital intermediate file to generate the particular imagery product.
